# EUROPEAN PATENT APPLICATION

(11) **EP 3 809 351 A1**
(43) Date of publication of application: **21.04.2021**
(21) Application number: 20202085.5
(22) Date of filing: 15.10.2020
(51) Int. Cl.: G06Q 20/20, G06Q 20/32, G06Q 20/34, G06Q 20/40

(54) **ELECTRONIC PAYMENT CONTROL METHOD AND SYSTEM**

(30) Priority: 18.10.2019 IT 201900019241
(71) Applicant: Rizzi, Gaetano, 16154 Genova (IT)
(72) Inventor: Rizzi, Gaetano, 16154 Genova (IT)
(74) Representative: Modiano, Micaela Nadia

(57) **Abstract**

An electronic payment control method, performed by connecting an electronic payment identification element (90) to an electronic payment terminal (70) of a recipient entity, the electronic payment comprising a transfer of a currency (V) from a virtual wallet (81) to the recipient entity; before the transfer of currency (V) is performed, a control step is performed which consists of: a remote control system (20), functionally connected to the electronic payment terminal (70), identifies the location of the electronic payment terminal (70), verifies whether the location of the electronic payment terminal (70) meets a predetermined payment location condition, and, if the payment location condition is met, authorizes the transfer of currency from the virtual wallet (81) to the recipient entity.

## Description

The present invention relates to a method and a system for the control of electronic payments.

As is known, electronic payments differ from classic payment systems in that they do not require the physical transfer of cash, which is replaced by electronic money (electronic money or currency).

For example, an electronic payment can be defined as in the document "American Education E-Payment Definition" (2008): an electronic payment (e-payment) occurs when the monetary value is transferred electronically or digitally between two entities (for example banks or individual consumers).

Various kinds of electronic payment are currently known and include payments by means of credit cards and debit cards (for example ATM cards or top-up prepaid cards).

Commonly, these electronic payments are made by means of well-known payment circuits, such as for example Visa®, MasterCard®, Maestro®, PayPal®, etc.

In daily practice, electronic payments are made by connecting an identification element, usually constituted by a plate-like item commonly known as "card" (credit or debit card), to an electronic payment terminal commonly known as POS (Point Of Sale), which is normally connected to a processing center of a bank or of a company that offers the service.

Following appropriate controls, the processing center authorizes the execution of the payment, i.e., the transfer of virtual currency from the bank account or from the virtual wallet of the owner of the card to the bank account or virtual wallet of the beneficiary.

In greater detail, the electronic payment terminal is normally provided with devices capable of reading, by contact or by means of "contactless" technology, identification data contained on a magnetic strip and/or a chip or other physical media integrated in the card. As an alternative, the function of the card is performed by an electronic device, such as for example a smartphone or a tablet or a smartwatch, provided with NFC ("Near Field of Communication") technology or the like.

In the background art, the controls that are performed before authorizing the payment are limited to verifying the authenticity of the identification element, for example by verifying the codes associated with the card, and/or the identity of the person who is using the identification element, typically by requesting the entry of a secret code or by verifying an identity document.

In some electronic payment methods of the known type, a message is also sent to a portable device associated with the owner of the card in order to report that the payment has occurred and thus allow to intervene promptly in case of an unauthorized payment.

In the background art, when an unauthorized payment is discovered, the user must contact on his own a control center, which will deactivate the card; it will be therefore necessary to issue another card from scratch.

Control methods for virtual payments of the known type have reached a high level of security but have some limitations.

In particular, as already mentioned, these controls of the known type allow only to block the payment in case of fraudulent use, verified by means of the failure to enter a correct secret code or by means of the identification of an unauthorized user by a merchant, or by direct intervention of the owner of the card.

In cases in which payer identification is not required, such as for example in the case of debit cards, the theft of the code together with the debit card renders these controls of the known type entirely ineffective, since an ill-intentioned individual can confidently make an electronic payment from the account or from the virtual wallet of the legitimate owner, without his knowledge, simply by entering the correct code, and even if the legitimate owner realized that the payment has occurred, such payment would be by then irreversible, with the burden of the transfer of virtual currency which would fall on the electronic payment management entity, such as for example the company that manages the electronic payment circuit of the debit card.

Furthermore, an ill-intentioned individual might in some way clone the card, acquiring illegally the electronic parameters thereof without the owner being aware, to then use the cloned card instead of the authentic card in the payment circuit, without - at least initially - the payment circuit being able to distinguish between the authorized owner and the ill-intentioned individual and between the authentic card and the cloned card.

Furthermore, in view of the ever greater spread of business models based on electronic payments and virtual currencies, the need is felt to have available a control method for electronic payments that can block or modulate a payment even in situations that are different from fraudulent use, for example so as to be able to make the virtual currency available only in predetermined situations, something which is not obtainable with control methods of the known type.

The aim of the present invention is to overcome the limitations of the background art described above, devising a method and a system for the control of electronic payments which allow to obtain better effects than those obtainable with known solutions and/or similar effects at a lower cost and with higher performance, in particular which are more versatile than the background art.

Within this aim, an object of the present invention is to conceive a method and a system for the control of electronic payments that are capable of preventing effectively unauthorized payments and of eliminating, or at least minimizing, the effectiveness (in certain conditions) of the cloning of the electronic payment identification element, such as for example a credit or debit card or another card.

Another object of the present invention is to provide a method and a system for the control of electronic payments that can be customized in order to develop various business models.

A further object of the present invention is to conceive a method and a system for the control of electronic payments that allow to increase the security of electronic payments.

Another object of the present invention is to provide a method and a system for the control of electronic payments that are highly reliable, relatively simple to provide, and economically competitive if compared with the background art.

This aim, as well as these and other objects which will become better apparent hereinafter, are achieved by a method for the control of electronic payments according to claim 1.

The intended aim and objects are also achieved by a system for the control of electronic payments according to claim 16.

Further characteristics and advantages of the invention will become better apparent from the description of some preferred but not exclusive embodiments of the method and system for the control of electronic payments according to the invention, illustrated by way of non-limiting example with the aid of the accompanying drawings, wherein:
Figures 1 and 2 are schematic views of a first possible application of an embodiment of the method and of the system for the control of electronic payments, according to the present invention;
Figure 3 is a schematic view of a second possible application of an embodiment of the method and of the system for the control of electronic payments according to the present invention.

With reference to the figures, the system for the control of electronic payments, designated generally by the reference numeral 10, comprises at least one electronic payment identification element 90 associated with at least one virtual wallet 81 of the user U who performs the electronic payment.

Preferably, the electronic payment identification element 90 is a physical medium that can be encoded, such as for example a credit card or a debit card or another card, or a medium or a device provided with a chip and/or magnetic strip and/or contactless technology or other electronic payment identification element 90 of the known type.

Optionally, the electronic payment identification element 90 can comprise an electronic device, for example a smartphone or a tablet or a smartwatch, provided with an NFC (Near Field Communication) system or the like.

The virtual wallet 81 is a memory space that is present on a remote server or, more generally, a virtual space, in which the currency V to be used for payment is credited, saved and managed. Examples of virtual wallets of the known type suitable for the purpose are the virtual wallets of prepaid cards or of the PayPal® circuit or of e-commerce or gaming websites.

The currency V is to be understood, in a fully general way, as any legally valid currency, or a virtual currency (for example Bitcoin) or a virtual coin of any kind. In some embodiments, the currency V comprises virtual credits which are given a conventional value within a circuit of participating merchants and/or companies and/or natural persons.

The system 10 further comprises an electronic payment terminal 70 of a recipient entity that is the beneficiary of the payment (e.g., a merchant, a company, a natural person, etc.), such as for example a terminal of the type commonly known as POS (Point Of Sale).

According to the invention, the electronic payment terminal 70 is provided with a location system and is preferably georeferenced, i.e., it is associated with a geographical metadata item that identifies its position. In some embodiments, the location system comprises a GPS geolocation device or the like, which optionally can be synchronized with a respective clock for each electronic payment terminal 70 or other similar device.

According to the invention, the electronic payment control system 10 also comprises a remote control system 20, which comprises for example one or more servers and appropriate software. This remote control system 20 is functionally connected at least to the electronic payment terminal 70 via a telematic communication network.

It is useful to specify that hereinafter, in the present description and in the accompanying claims, the expression "telematic communication network" is understood to refer to any telematic communication network of the known type, optionally comprising the Internet, in which the connection of the devices is provided preferably by means of a wireless link according to any one of the methods that are well-known to the person skilled in the art.

According to the invention, the remote control system 20 is configured to identify the location of the electronic payment terminal 70 when it is connected to the electronic payment identification element 90 to perform the payment (in practice, therefore, when payment is requested or attempted). In practice, this identification is provided by reading the georeference metadata item or the geolocation coordinates sent by the electronic payment terminal 70 to the remote control system 20 via the telematic communication network.

In this case, the remote control system 20 is also configured to verify whether the above-cited location of the electronic payment terminal 70 meets a predetermined payment location condition, for example by checking whether the location of the electronic payment terminal 70 is within a predetermined geographical area.

In this manner it is possible to authorize the payment, i.e., the transfer of the currency V from the virtual wallet 81 to the recipient entity, only if the predetermined payment location condition is met, for example only if the location of the electronic payment terminal 70 is within the preselected geographical area. Otherwise, the remote control system 20 blocks (or does not authorize) said payment.

Optionally, the remote control system 20 is also configured to perform other controls, for example the payment request time (date/time of day), which will be described in detail hereinafter with reference to the electronic payment control method according to the invention.

In some embodiments, the electronic payment control system 10 also comprises a portable device 60, for example a smartphone or a tablet or a smartwatch, operated by the user U, and the portable device 60 can be associated with or coupled to the electronic payment identification element 90, such as for example a credit card or debit card or other card, and/or associated with or coupled to the user U who is the owner of the electronic payment identification element 90. Optionally, the owner user U can dissociate or uncouple his own position from that of the electronic payment identification element 90, for example by means of an appropriate command via a mobile or fixed platform.

The portable device 60 is provided with a geolocation device (preferably GPS or the like) and is functionally connected to the remote control system 20 via a telematic communication network.

In these embodiments, the remote control system 20 is also configured to identify the location of the portable device 60 when the electronic payment identification element 90 is connected to the electronic payment terminal 70 (therefore when a payment is requested or attempted).

In this case, the remote control system 20 is configured also to check whether the location of the portable device 60 meets a predetermined location condition of the user U, for example by verifying whether the location of the user U coincides with, or is within a predetermined distance from, the location of the electronic payment terminal 70.

As an alternative or in addition, the remote control system 20 can be configured to verify the location of the user U by virtue of different systems, for example by means of the identification of the user U by means of geolocated fixed apparatuses optionally provided with biometric identification devices or by means of the sending of data certified by entities that belong to the control system (airport offices, public authorities, etc.).

In this manner it is possible to block the payment, i.e., the transfer of the currency V from the virtual wallet 81 to the recipient entity, and/or warn the user U when a payment is attempted far from him and therefore probably by a different person who might be an ill-intentioned individual who has acquired the electronic payment identification element 90.

The method according to the present invention is preferably provided by means of the system 10 that has just been described and is therefore an electronic payment control method in which a user U performs a payment by means of an electronic payment identification element 90 associated with at least one virtual wallet 81, connecting (in a known manner) the electronic payment identification element 90 to an electronic payment terminal 70 of a recipient entity, i.e., the beneficiary of the payment (e.g., a merchant, a company, a natural person, etc.).

In detail, the concerned electronic payment comprises at least one transfer of a currency V (in the sense clarified earlier) from the virtual wallet 81 of the user U to the bank account or to the virtual wallet of the recipient entity that is the beneficiary of the payment.

According to the invention, before said transfer of currency V from the virtual wallet 81 to the recipient entity is authorized (and therefore performed), the following control step is performed: the remote control system 20, functionally connected to the electronic payment terminal 70 via a telematic communication network, identifies the location (i.e., the position) of the electronic payment terminal 70 and verifies whether said location of the electronic payment terminal 70 meets a predetermined payment location condition.

Then, if the payment location condition is met, the remote control system 20 authorizes the payment, i.e., the transfer of currency V from the virtual wallet 81 to the recipient entity. In other words, the currency V that is present in the virtual wallet 81 is made available for payment.

Preferably, the payment location condition to be met is that the location of the electronic payment terminal 70 is within a preset area A (for example a delimited geographical region), which can be for example the territory of a municipality, of a province, of an administrative region, or the area of the extent of a shopping center, etc.

In this manner, the currency V that is present in the virtual wallet 81 is available for payment only when said payment occurs within the predetermined area A.

Another possible payment location condition to be met, which is an alternative or an addition to the preceding one, is that the location of the electronic payment terminal 70 is within a preset distance from a reference element whose position is identified. Such reference element can be a means of transport, such as for example a ship (so as to ensure that the currency V that is present in the virtual wallet 81 is available only for payments on board said ship), or the user U who owns the electronic payment identification element 90 or a device associated with him (so as to ensure that the currency V that is present in the virtual wallet 81 is available only for payments made by said user U).

Optionally, in the same control step, the remote control system 20 also identifies the time (in practice, the date and/or the hour and/or the minute) of the payment request and verifies whether said payment request time meets a predetermined payment time condition. If the payment time condition is met, the remote control system 20 authorizes payment, i.e., the transfer of currency V from the virtual wallet 81 to the recipient entity.

For this purpose, the electronic payment terminal 70 is provided with a timer or a clock, preferably of the digital type. In practice, the payment request time is constituted by the date and/or hour and/or minute when the electronic payment identification element 90 is connected to the electronic payment terminal 70 (therefore the moment when payment is attempted).

Preferably, the payment time condition to be met is that the payment request time is comprised within a predetermined time interval (for example a date interval and/or an hour interval).

In combination with the payment location condition, the payment time condition to be met is that the payment request time is comprised within a predetermined time interval when the location of the electronic payment terminal 70 is within a predetermined area A.

In some embodiments, the remote control system 20, before authorizing the transfer of currency V from the virtual wallet 81, verifies that a predetermined payment location condition and a predetermined payment time condition are both met, so as to ensure that the currency V in the virtual wallet 81 is available only in a certain area A in a given period.

In some embodiments, the predetermined payment time condition is determined as a function of the location of the electronic payment terminal 70; or, vice versa, the predetermined payment location condition is determined as a function of the payment request time.

In the preferred embodiments, the payment location condition, as well as the optional payment time condition, is determined in a preliminary crediting step, in which the currency V is credited in the virtual wallet 81; for example, when a flight ticket is purchased a certain amount of currency V is credited into the virtual wallet 81 (crediting step) as a bonus and at the same time it is established that this amount of currency V can be used only within the territory of the destination city of the flight (payment location condition).

Obviously, the authorization of the transfer of currency V can be conditioned also by other parameters, in addition to the location and/or time of the payment, such as for example the product type of the recipient entity that is the beneficiary of the payment, or by physical and/or chemical parameters, such as for example the temperature, humidity and/or pressure of the payment environment, the pollution of the payment environment, i.e., the type and/or quantity of pollutants that are present in the air, wind speed or the speed of a moving vehicle, etc.

In one embodiment, in the same control step, the remote control system 20 also identifies the payment request ambient temperature (for example expressed in degrees Celsius, degrees Fahrenheit or degrees Kelvin) and verifies whether said payment request ambient temperature meets a predetermined payment temperature condition. If the payment temperature condition is met, the remote control system 20 authorizes the payment, i.e., the transfer of currency V from the virtual plate 81 to the recipient entity.

The payment request ambient temperature is detected by a temperature sensor and is sent to the remote control system 20 via the telematic communication network. The temperature sensor can be comprised in, or connected wirelessly or in a wired manner to, the electronic payment terminal 70 or the electronic payment identification element 90, in particular if the latter is an electronic device, for example a smartphone or a tablet or a smartwatch.

In practice, the payment request ambient temperature is constituted by the temperature of the environment or of the location in which the electronic payment identification element 90 is connected to the electronic payment terminal 70 (therefore the temperature of the location where payment is attempted).

Preferably, the payment temperature condition to be met is that the payment request ambient temperature is comprised within a predetermined temperature interval.

In one embodiment, in the same control step, the remote control system 20 also identifies the payment request ambient humidity (for example expressed as a percentage) and verifies whether said payment request ambient humidity meets a predetermined payment humidity condition. If the payment humidity condition is met, the remote control system 20 authorizes the payment, i.e., the transfer of currency V from the virtual wallet 81 to the recipient entity.

The payment request ambient humidity is detected by a humidity sensor and is sent to the remote control system 20 via the telematic communication network. The humidity sensor can be comprised in, or connected wirelessly or in a wired manner to, the electronic payment terminal 70 or the electronic payment identification element 90, particularly if the latter is an electronic device, for example a smartphone or a tablet or a smartwatch.

In practice, the payment request ambient humidity is constituted by the humidity of the environment or of the place in which the electronic payment identification element 90 is connected to the electronic payment terminal 70 (therefore the humidity of the location where payment is attempted).

Preferably, the payment humidity condition to be met is that the payment request ambient humidity is comprised within a predetermined humidity interval.

In one embodiment, in the same control step, the remote control system 20 also identifies the payment request ambient pressure (for example expressed in pascals, atmospheres or bars) and verifies whether said payment request ambient pressure meets a predetermined payment pressure condition. If the payment pressure condition is met, the remote control system 20 authorizes the payment, i.e., the transfer of currency V from the virtual wallet 81 to the recipient entity.

The payment request ambient pressure is detected by a pressure sensor and is sent to the remote control system 20 via the telematic communication network. The pressure sensor can be comprised in, or connected wirelessly or in a wired manner to, the electronic payment terminal 70 or the electronic payment identification element 90, in particular if the latter is an electronic device, for example a smartphone or a tablet or a smartwatch.

In practice, the payment request ambient pressure is constituted by the pressure of the environment or of the location in which the electronic payment identification element 90 is connected to the electronic payment terminal 70 (therefore the temperature of the location where payment is attempted).

Preferably, the payment pressure condition to be met is that the payment request ambient pressure is comprised within a predetermined pressure interval.

In one embodiment, in the same control step, the remote control system 20 also identifies the payment request ambient pollution and verifies whether said payment request ambient pollution meets a predetermined payment pollution condition. If the payment pollution condition is met, the remote control system 20 authorizes the payment, i.e., the transfer of currency V from the virtual wallet 81 to the recipient entity.

The payment request ambient pollution is detected by one or more sensors and sent to the remote control system 20 via the telematic communication network. For example, these sensors are selected from the group constituted by: a CO2 (carbon dioxide) concentration detection sensor; a CH4 (methane) concentration detection sensor; a CO (carbon monoxide) concentration detection sensor; a PM 10/2.5/1 concentration detection sensor, i.e., a sensor configured to detect the presence and the concentration of PM10 and/or PM 2.5 and/or PM 1 particulate matter, adapted to detect the presence of fine particulate and smoke. These sensors can be comprised in, or connected in a wireless or wired manner to, the electronic payment terminal 70 or the electronic payment identification element 90, particularly if the latter is an electronic device, for example a smartphone or a tablet or a smartwatch.

In practice, the payment request ambient pollution is constituted by the type and/or quantity of pollutants that are present in the air of the environment or of the location in which the electronic payment identification element 90 is connected to the electronic payment terminal 70 (therefore the pollution of the location where payment is attempted).

Preferably, the payment pollution condition to be met is that the payment request ambient pollution is lower than a predetermined pollution level.

In one embodiment, in the same control step, the remote control system 20 also identifies the payment request ambient noise (for example expressed in decibels) and verifies whether the payment request ambient noise meets a predetermined payment noise condition. If the payment noise condition is met, the remote control system 20 authorizes the payment, i.e., the transfer of currency V from the virtual wallet 81 to the recipient entity.

The payment request ambient noise is detected by an acoustic sensor and is sent to the remote control system 20 via the telematic communication network. The acoustic sensor can be comprised in, or connected wirelessly or in a wired manner to, the electronic payment terminal 70 or the electronic payment identification element 90, particularly if the latter is an electronic device, for example a smartphone or a tablet or a smartwatch.

In practice, the payment request ambient noise is constituted by the noise of the environment or of the location where the electronic payment identification element 90 is connected to the electronic payment terminal 70 (therefore the noise of the location in which payment is attempted).

Preferably, the payment noise condition to be met is that the payment request ambient noise must be lower than a predetermined noise level.

Advantageously, said electronic payment identification element 90 can be associated with a plurality of virtual wallets 81, 82, 83, each of which is optionally associated with a respective predetermined payment location condition and/or with a respective time condition. Optionally, one or more of the virtual wallets 82, 83 are not associated with any condition (and therefore contain currency V' that is always available). In this manner, when the currency V contained in the first virtual wallet 81 is not available for payment (for example because the corresponding payment location condition is not met), the payment can be performed by transferring the currency V' that is present into one of the other virtual wallets 82, 83 (if available).

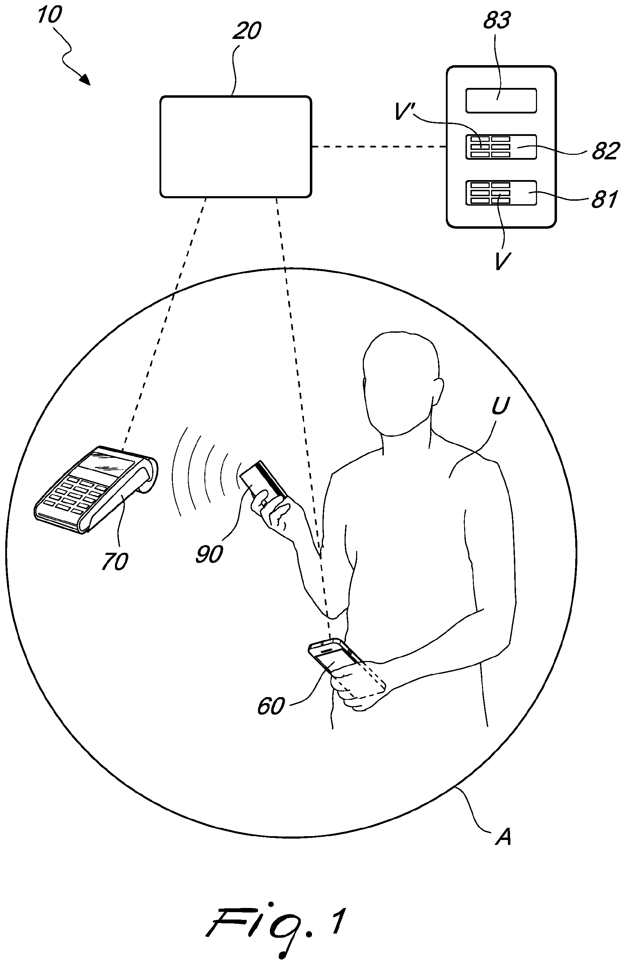

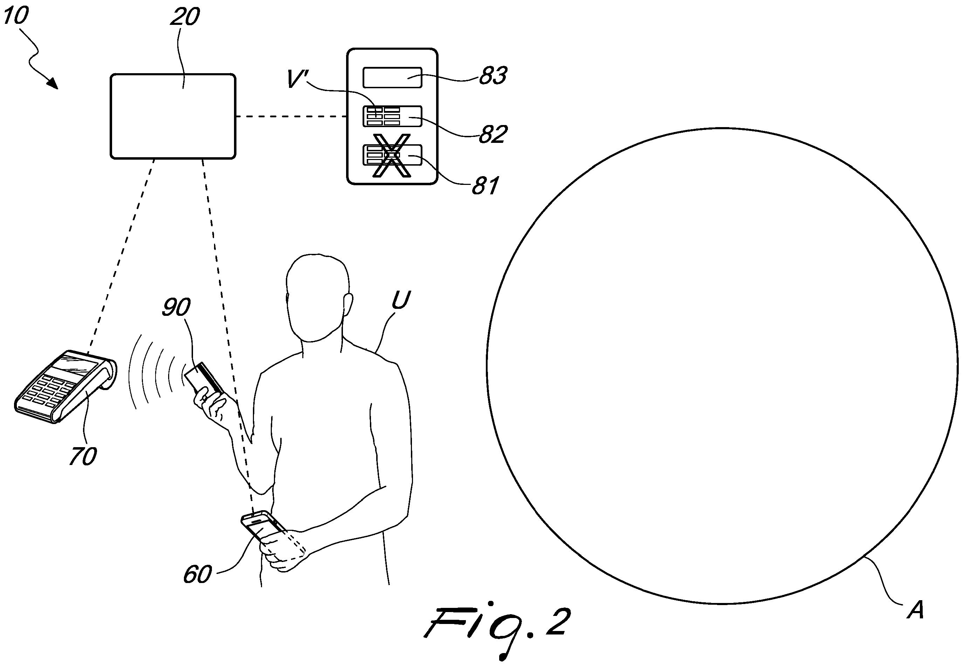

Figures 1 and 2 show an example of application in which the electronic payment identification element 90 is associated with three virtual wallets 81, 82, 83, in which the first virtual wallet 81 is associated with the following payment location condition to be met: the location of the electronic payment terminal 70 is within the area A.

In Figure 1, the above-cited payment location condition is met and therefore when the user U connects the identification of the electronic payment identification element 90 to the electronic payment terminal 70, the remote control system 20, after verifying that the location of the electronic payment terminal 70 is within the area A, authorizes or allows the transfer of currency V from the first virtual wallet 81 to the recipient entity.

In Figure 2, the above payment location condition is not met and therefore, when the user U connects the electronic payment identification element 90 to the electronic payment terminal 70, the remote control system 20, after verifying that the location of the electronic payment terminal 70 is outside of the area A, blocks (or does not authorize) the transfer of currency V from the first virtual wallet 81 to the recipient entity. In this case it may be possible to transfer the currency V' that is present in the second virtual wallet 82 in order to perform the payment in any case.

Optionally, the electronic payment identification element 90 is connected to, or associated with, an existing electronic payment circuit (for example Visa®, MasterCard®, Maestro®, PayPal®, etc.), so as to be able to use a currency made available by the electronic payment circuit in addition or as an alternative to the currency that is present in the one or more virtual wallets 81, 82, 83.

Optionally, the at least one virtual wallet 81 can be integrated in an existing electronic payment circuit (for example Visa®, MasterCard®, Maestro®, PayPal®, etc.), so that the transfer of currency V from the virtual wallet 81 to the recipient entity occurs advantageously by means of said established electronic payment circuit.

Optionally, the remote control system 20 varies the availability of currency V in the virtual wallet 81 and/or assigns a different monetary value to said currency V as a function of the location of the electronic payment terminal 70 and/or as a function of the payment request time, for example increasing by 10% of the value of the currency V that is present in the virtual wallet 81 when the location of the electronic payment terminal 70 is within an area A and/or when the payment request time is comprised within a certain time interval.

In this manner, the method is advantageously customizable to favor payments in certain places and/or and in given periods.

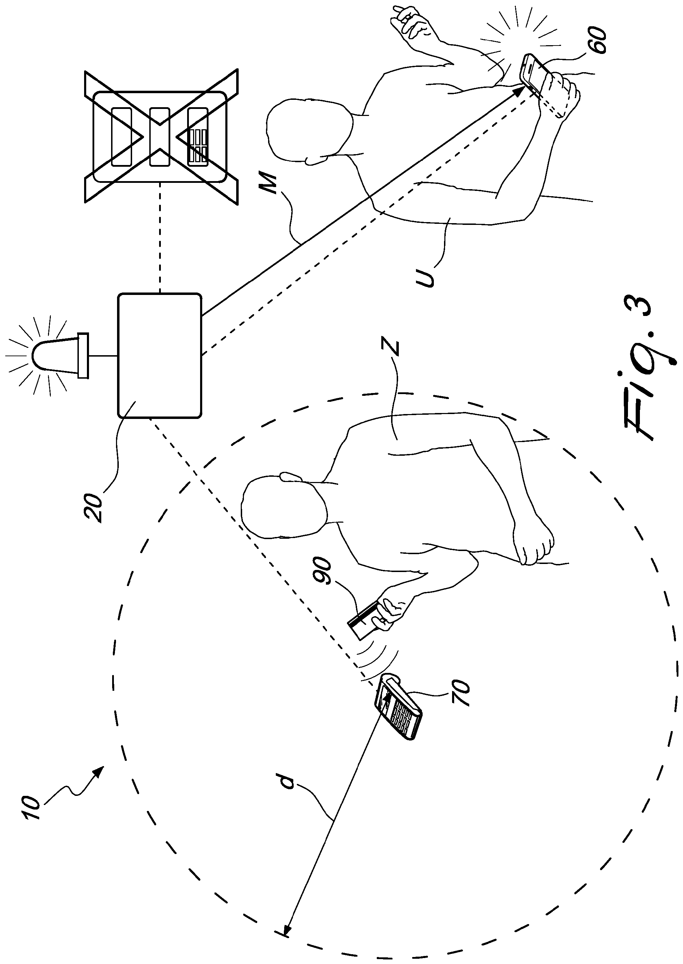

In some embodiments, such as the one shown in Figure 3, during the control step the remote control system 20 also identifies the location of the user U and verifies whether the location of the user U meets a predetermined user location condition. If the user location condition is met, the remote control system 20 authorizes the payment, i.e., the transfer of currency V from the virtual wallet 81 to the recipient entity.

Preferably, the user location condition to be met is that the location of the user U is within a preset distance d from the location of the electronic payment terminal 70.

In the preferred embodiments, the location of the user U is identified with one of the methods described previously, and preferably by means of a portable device 60 associated with the user U and provided with a location device and functionally connected to the remote control system 20 by means of a telematic communication network.

Advantageously, if the user location condition is not met, the remote control system 20 blocks the functionality of the electronic payment identification element 90 (for example by "blocking" the credit or debit card) and/or sends a message M to the user U and/or sends a message to an electronic payment management entity. For example, this electronic payment management entity can be the company that manages the electronic payments circuit, which can act accordingly, performing further checks and, if appropriate, can contact the user U and/or the merchant who is the recipient of the payment, who may withhold the card, and/or the authorities. Advantageously, the message M can contain the location of the electronic payment terminal 70.

As is evident, these embodiments in which the user location condition is controlled are particularly useful to prevent unauthorized payments by people who have obtained the electronic payment identification element 90, such as for example a credit card or debit card or other card, or a medium or a device provided with a chip and/or with a magnetic strip and/or contactless technology.

Figure 3 shows a situation in which an unauthorized person Z has obtained the electronic payment identification element 90 of the user U and attempts to make an electronic payment. When the unauthorized person Z connects the electronic payment identification element 90 to the electronic payment terminal 70, the remote control system 20 identifies the location of the user U, by means of the portable device 60, and verifies whether the location of the user U is within a predetermined distance d from the location of the electronic payment terminal 70 (user location condition).

In the illustrated example, once it has been verified that the user location condition is not met, the remote control system 20 prevents the execution of the payment and activates an appropriate alarm procedure.

In particular, in this example, a message M is sent to the user U, via the portable device 60, warns him of the unauthorized payment attempt and indicates the location of the payment attempt. The user U can thus go to the location of the payment to retrieve his electronic payment identification element 90, such as for example a credit card or debit card or other card, or a medium or a device provided with a chip and/or magnetic band and/or contactless technology, which in the meantime has been temporarily deactivated and withheld by the merchant. In this manner one avoids having to issue a new electronic payment identification element 90 from scratch, saving on the associated costs and times.

In practice it has been found that the invention fully achieves the intended aim and objects. In particular, it has been shown that the method and system for the control of electronic payments thus conceived allow to overcome the qualitative limitations of the background art, since they allow to obtain better effects than those obtainable with known solutions and/or similar effects with a lower cost and with a higher performance; in particular, they are more versatile with respect to the background art.

One advantage of the method and system for the control of electronic payments according to the present invention resides in that it is capable of preventing effectively unauthorized payments and of eliminating, or at least minimizing, the effectiveness (in certain conditions) of the cloning of the electronic payment identification element, such as for example a credit card or a debit card or another card. As regards this second item, in practice, the proposed solutions makes it pointless to clone the card, since it is configured to block the cloned card that is in a different location with respect to the legitimate owner.

In general, the method and system for the control of electronic payments according to the present invention provide, with respect to the background art, a deterrence solution against the theft and/or cloning of the credit card or debit card against any ill-intentioned individuals who might use it fraudulently, since the suspension or blocking of the electronic payment, i.e., the transfer of currency, makes it substantially pointless to steal or clone the card, without however creating logistical and cost problems to the electronic payment management entity, i.e., to the management entity of said card.

Another advantage of the method and system for the control of electronic payments according to the present invention resides in that it prevents fraudulent use of the electronic payment identification element, such as for example a credit card or debit card or other card, even by means of e-commerce platforms, preventing electronic payment, i.e., the transfer of currency, when the position of the card used and the position of the legitimate owner are separate; this control can be performed also by virtue of the fact that each terminal, whether movable or fixed, is currently provided with in an IP address that can be geolocated.

A further advantage of the method and system for the control of electronic payments according to the present invention resides in that they can be customized to develop various business models.

Another advantage of the method and system for the control of electronic payments according to the present invention resides in that it increases the security of electronic payments.

Moreover, an advantage of the method and system for the control of electronic payments according to the present invention resides in that they are highly reliable, relatively simple to provide, and economically competitive if compared with the background art.

The invention thus conceived is susceptible of numerous modifications and variations, all of which are within the scope of the appended claims. All the details may furthermore be replaced with other technically equivalent elements.

In practice, the materials used, so long as they are compatible with the specific use, as well as the contingent shapes and dimensions, may be any according to the requirements and the state of the art.

To conclude, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

The disclosures in Italian Patent Application No. 102019000019241 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electronic payment control method, wherein a user (U) performs an electronic payment by means of an electronic payment identification element (90) associated with at least one virtual wallet (81), connecting said electronic payment identification element (90) to an electronic payment terminal (70) of a recipient entity, said electronic payment comprising a transfer of a currency (V) from said virtual wallet (81) to said recipient entity, **characterized in that** before said transfer of currency (V) from said virtual wallet (81) to said recipient entity is performed, a control step is performed which comprises the substeps of:
- a remote control system (20), functionally connected to said electronic payment terminal (70) by means of a telematic communication network, identifies the location of said electronic payment terminal (70);
- said remote control system (20) verifies whether said location of said electronic payment terminal (70) meets a predetermined payment location condition; and
- if said payment location condition is met, said remote control system (20) authorizes said transfer of currency (V) from said virtual wallet (81) to said recipient entity.

2. The electronic payment control method according to claim 1, **characterized in that** said payment location condition is that said location of said electronic payment terminal (70) is within a predetermined area (A).

3. The electronic payment control method according to claim 1 or 2, **characterized in that** said control step further comprises the substeps of:
- said remote control system (20) identifies the payment request time;
- said remote control system (20) verifies whether said payment request time meets a predetermined payment time condition; and
- if said payment time condition is met, said remote control system (20) authorizes said transfer of currency (V) from said virtual wallet (81) to said recipient entity.

4. The electronic payment control method according to claim 3, **characterized in that** said payment request time comprises the date and/or time of day and/or the minute when said electronic payment identification element (90) is connected to said electronic payment terminal (70).

5. The electronic payment control method according to claim 3 or 4, **characterized in that** said payment time condition is that the payment request time is comprised within a predetermined time interval.

6. The electronic payment control method according to any one of claims 3 to 5, **characterized in that** said payment time condition is determined as a function of the location of said electronic payment terminal (70), or said payment location condition is determined as a function of said payment request time.

7. The electronic payment control method according to any one of the preceding claims, **characterized in that** said payment location condition is determined in a preliminary crediting step in which said currency (V) is credited in said virtual wallet (81).

8. The electronic payment control method according to any one of the preceding claims, **characterized in that** said control step further comprises the substeps of:
- said remote control system (20) identifies the location of said user (U);
- said remote control system (20) verifies whether said location of said user (U) meets a predetermined user location condition; and
- if said user location condition is met, said remote control system (20) authorizes said transfer of currency (V) from said virtual wallet (81) to said recipient entity.

9. The electronic payment control method according to claim 8, **characterized in that** said location of said user (U) is identified by means of a portable device (60) provided with a geolocation device and functionally connected to said remote control system (20) via a telematic communication network.

10. The electronic payment control method according to claim 8 or 9, **characterized in that** said user location condition is that said location of said user (U) is within a predetermined distance (d) from said location of said electronic payment terminal (70).

11. The electronic payment control method according to any one of claims 8 to 10, **characterized in that**, if said user location condition is not met, said remote control system (20) blocks the functionality of said electronic payment identification element (90) and/or sends a message (M) to said user (U) and/or sends a message to an entity for the management of said electronic payment.

12. The electronic payment control method according to claim 11, **characterized in that** said message (M) sent to said user (U) and/or to said entity for the management of said electronic payment comprises said location of said electronic payment terminal (70).

13. The electronic payment control method according to any one of the preceding claims, **characterized in that** said electronic payment identification element (90) is associated with a plurality of virtual wallets (81, 82, 83), each of which is associated with a respective predetermined payment location condition.

14. The electronic payment control method according to any one of the preceding claims, **characterized in that** said remote control system (20) varies the availability of currency (V) in said virtual wallet (81) and/or attributes a different monetary value to said currency (V) as a function of said location of said electronic payment terminal (70).

15. The electronic payment control method according to any one of claims 3 to 14, **characterized in that** said remote control system (20) varies the availability of currency (V) in said virtual wallet (81) and/or attributes a different monetary value to said currency (V) as a function of said payment request time.

16. The electronic payment control method according to any one of the preceding claims, **characterized in that** said control step further comprises the substeps of:
- said remote control system (20) identifies the payment request ambient temperature;
- said remote control system (20) verifies whether said payment request ambient temperature meets a predetermined payment temperature condition; and
- if said payment temperature condition is met, said remote control system (20) authorizes said transfer of currency (V) from said virtual wallet (81) to said recipient entity.

17. The electronic payment control method according to any one of the preceding claims, **characterized in that** said control step further comprises the substeps of:
- said remote control system (20) identifies the payment request ambient humidity;
- said remote control system (20) verifies whether said payment request ambient humidity meets a predetermined payment humidity condition; and
- if said payment humidity condition is met, said remote control system (20) authorizes said transfer of currency (V) from said virtual wallet (81) to said recipient entity.

18. The electronic payment control method according to any one of the preceding claims, **characterized in that** said control step further comprises the substeps of:
- said remote control system (20) identifies the payment request ambient pressure;
- said remote control system (20) verifies whether said payment request ambient pressure meets a predetermined payment pressure condition; and
- if said payment pressure condition is met, said remote control system (20) authorizes said transfer of currency (V) from said virtual wallet (81) to said recipient entity.

19. The electronic payment control method according to any one of the preceding claims, **characterized in that** said control step further comprises the substeps of:
- said remote control system (20) identifies the payment request ambient pollution;
- said remote control system (20) verifies whether said payment request ambient pollution meets a predetermined payment pollution condition; and
- if said payment pollution condition is met, said remote control system (20) authorizes said transfer of currency (V) from said virtual wallet (81) to said recipient entity.

20. The electronic payment control method according to any one of the preceding claims, **characterized in that** said control step further comprises the substeps of:
- said remote control system (20) identifies the payment request ambient noise;
- said remote control system (20) verifies whether said payment request ambient noise meets a predetermined payment noise condition; and
- if said payment noise condition is met, said remote control system (20) authorizes said transfer of currency (V) from said virtual wallet (81) to said recipient entity.

21. An electronic payment control system (10), comprising:
- an electronic payment identification element (90) associated with at least one virtual wallet (81); and
- an electronic payment terminal (70) of a recipient entity;
said system is **characterized in that** said electronic payment terminal (70) is provided with a location system, and **in that** it further comprises a remote control system (20), functionally connected to said electronic payment terminal (70) via a telematic communication network, which is configured to identify the location of said electronic payment terminal (70), when said terminal is connected to said electronic payment identification element (90) in order to perform the payment, and to verify whether said location of said electronic payment terminal (70) meets a predetermined payment location condition.

22. The electronic payment control system (10) according to claim 21, **characterized in that** it comprises a portable device (60) which can be associated with a user (U) who is the owner of said electronic payment identification element (90) and is provided with a geolocation device and is functionally connected to said remote control system (20); said remote control system (20) is furthermore configured to identify the location of said portable device (60), when said electronic payment terminal (70) is connected to said electronic payment identification element (90) in order to perform the payment and to verify whether said location of said portable device (60) meets a predetermined user location condition.
